# EUROPEAN PATENT SPECIFICATION

(11) **EP 1 420 187 B1**
(45) Date of publication and mention of the grant of the patent: **29.06.2005**
(21) Application number: 03380259.6
(22) Date of filing: 05.11.2003
(51) Int. Cl.: F16F 9/02, F16F 9/43

(54) **Gas Damper**
Gasdämpfer
Amortisseur à gaz

(30) Priority: 12.11.2002 ES 200202594
(43) Date of publication of application: 19.05.2004
(73) Proprietor: Azol-Gas, s.l., 01195 Vitoria-Gasteiz (Alava) (ES)
(72) Inventor: Cabrerizo Pariente, Antonio, 001015 Vitoria-Gasteiz Alava (ES); Alejos Perez, Oscar, 01006 Vitoria-Alava (ES)
(74) Representative: Davila Baz, Angel

(56) References cited:
- EP-A- 0 959 263
- US-A- 3 260 515
- PATENT ABSTRACTS OF JAPAN vol. 014, no. 103 (M-0941), 26 February 1990 (1990-02-26) & JP 01 307531 A (FUJI SEIKI CO LTD), 12 December 1989 (1989-12-12)

## Description

The present invention refers to a gas damper or spring, of the type comprising a sealed chamber containing a compressed gas, which chamber houses a piston which can move along the chamber, and is provided with a safety valve operated by said piston.

In springs of the type set forth, the compressible fluid usually consists of a gas, which is progressively compressed as the piston moves in its forward stroke. These springs are normally calculated for a certain piston stroke, in which the gas contained in the chamber reaches a maximum expected pressure. In the case that the piston exceeds this stroke, a deformation in the body could take place with the violent expulsion of the piston rod, or hazardous leaks.

For preventing this drawback, it is known to provide the chamber with a safety valve operated by the piston itself, when the latter reaches the limit of its expected stroke, venting of the compressed gas then occurring.

A gas spring with the constitution disclosed and with a safety valve is disclosed, for example, in Japanese patent 01-307531 and in European patent EP 0959263. In both cases, the safety valve is installed on the bottom of the chamber, which forces the piston to run the entire chamber to reach the safety valve, thereby resting on or being dose to the bottom of said chamber. With this valve arrangement, the piston knocking on the bottom of the chamber can be produced. Furthermore, to cause the opening of the valve, the piston must move a movable element of the valve or break a dosing element thereof.

The object of the present invention is to eliminate the drawbacks set forth by means of a special constitution of the safety valve and by means of its arrangement in the sidewall of the chamber and not on the bottom thereof.

According to the present invention, the safety valve is located in the wall of the chamber of the damper and is constituted of a through borehole and an internal sealing element.

The borehole is radially made in the wall of the chamber and, in the outlet inside of said chamber, it is provided with a seat on which the sealing element rests, which will be of a substantially non-deformable material, for example a steel-based ball, and of a diameter greater than that of said seat.

The ball or sealing element is fixed on the hole, on the internal side of the wall, where it could be fixed by means of an adhesive. This constitution will be useful in cylinders of small dimensions or with a wall of reduced thickness.

The seat of the valve will preferably be defined by a sleeve or a cylindrical jacket fixed to the internal surface of the borehole, from its outlet inside the chamber. This wall or jacket can open into the chamber through a conical flare, which will define the seat for the ball. This ball will be of a smaller diameter than that of the borehole of the wall of the chamber, but greater than the internal diameter of the jacket.

For the assembly of the valve in the wall of the chamber, the sealing element can be fixed to the seat by means of an adhesive or the like.

Once the valve is installed in the wall of the chamber, the sealing element of said valve will remain inside the chamber. The borehole for installation of the valve will be located at a point coinciding with the maximum stroke expected for the piston of the damper, at a certain distance from the bottom of the chamber.

Thus, during operation of the damper, the sealing element will remain on the seat of the valve, not only by means of the fixing adhesive for fixing it to said seat, but also by means of the effect of the pressure of the gas contained in the chamber of the damper.

During operation of the damper, when the piston reaches its maximum stroke, it will laterally push the sealing element, detaching it from the seat for it to drop to the bottom of the chamber and unsealing the borehole to allow the free venting of the compressed gas therethrough.

To replace the valve, it will be enough to remove the jacket or sleeve from the borehole of the chamber and re-fix the sealing element on the seat thereof, introducing the assembly through the borehole, having a diameter greater than that of the ball.

The features and advantages set forth can be better understood with the following description made with reference to the attached drawings, wherein a nonlimiting embodiment is shown.

In the drawings:
Figure 1 shows a diametral section of a gas spring, constituted according to the invention.
Figure 2 shows a diametral section of the valve included in the spring of figure 1.
Figure 3 shows a view similar to figure 1, wherein the valve, in an open position by the action of the piston of the spring, is shown.
As can be seen in figure 1, the spring is composed of a cylindrical casing 1 inside of which a piston 2 is assembled which can move along said chamber. Between the piston 2 and the bottom of the casing 1, a chamber 3 is defined which is full of a compressible fluid, preferably gas.

The piston 2 will be provided with a body or rod 4 projecting to the outside through the open base of the casing 1, wherein a cover or retainer will be assembled against which the piston 2 can rest in its limit recoil position.

According to the present invention, a safety valve 5, located at a point coinciding with the expected maximum movement point of the piston 2 in the forward direction, indicated with arrow A, is assembled in the wall 1 of the casing, in the area of the chamber 3.

The valve 5 is assembled in a radial borehole 6 made in the wall 1 of the casing.

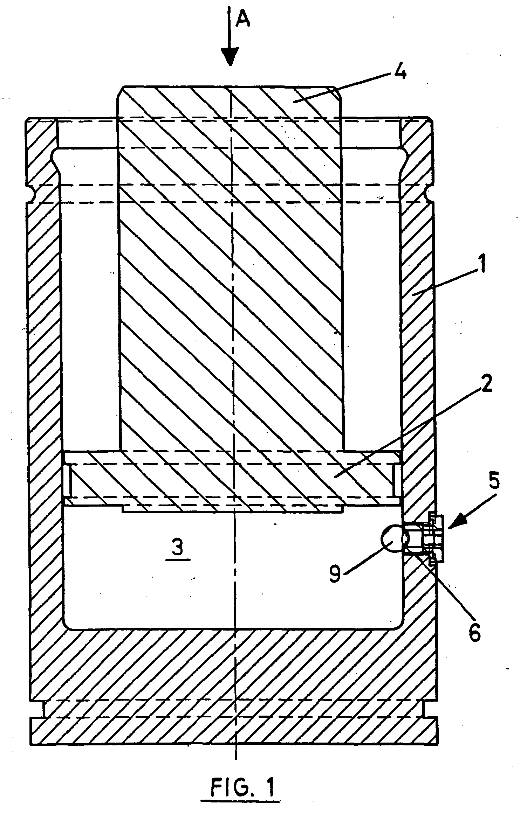

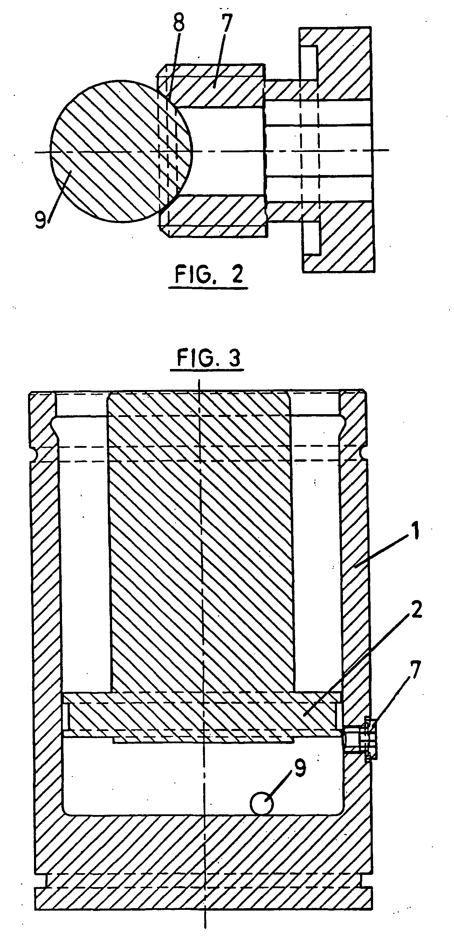

As can be seen better in figure 2, the valve 5 is constituted of a wall or jacket 7 internally fixed in the borehole 6, for example by means of a thread, from the outlet of said borehole in the interior of the chamber 3. This wall or jacket 7 forms an internal seat 8 for supporting a ball 9 of a non-deformable nature, for example of steel.

The ball 9 will be of a diameter that is greater than the internal diameter of the wall or jacket 7, but smaller than that of the-borehole 6, such that said ball can freely pass through the borehole 6, but not through the wall or jacket 7.

For the assembly of the valve in the wall 1 of the casing, the ball 9 can be fixed to the seat 8, for example by means of an adhesive. Once the valve is assembled in the wall 1, the ball 9 remains pressed against the seat 8 by means of the effect of the pressure prevailing in the chamber 3.

During operation of the spring, in the case that the piston 2 reaches the position of the valve 5 and tries to go beyond it, it will push the ball 9, which remains located in the interior of the chamber 3, detaching it from the seat 8 and dropping to the bottom of the chamber 3, as shown in figure 3. As soon as the ball 9 is detached from the seat 8, the passage through the wall or jacket 7 remains open to allow the free venting of the gas contained in the chamber 3.

Thus, an excess in the stroke of the piston 2 which could cause a deformation in the body with a violent expulsion of the piston rod, or hazardous leaks, is prevented.

By the valve 5 being located in the wall 1, it is achieved that its opening occurs before the piston 2 reaches the bottom of the chamber 3.

On the other hand, the valve has a simple constitution and its replacement can also be carried out in a simple manner, doing no more than removing the wall or jacket 7 from the borehole 6 and adhering the ball 9 onto the seat 8, there being able to use a new ball or the previous one, once it is removed from the chamber 3, the removal of the ball 9 as well as the re-installation of the valve being carried out as a result of the diameter of the borehole 6 being greater than that of the ball 9.

The opening of the valve caused by the piston 2 produces the drop of the ball 9 inside the chamber 3, preventing projections of components or parts of the valve to the outside.

The wall or jacket 7, with its coaxial passage, can be designed so that it allows a fast exhaust of the gas from the spring, and also with a characteristic exhaust sound warning the operator of the situation occurring.

As indicated, the valve 5 could be constituted of just the sealing element or ball 9. In such case, the jacket 7 would be dispensed with, and the seat 8 would be formed in the internal outlet of the borehole 6, where the ball 9 could be fixed by means of an adhesive, said ball logically being of a diameter greater than that of the borehole. In case of replacing or resetting the valve, opening the chamber of the damper would be necessary.

## Claims

1. A gas damper, comprising a sealed chamber (3) full of a compressible fluid, along which a piston (2) causing the compression of said fluid can move, said chamber (3) being provided with a safety valve (5) operated by said piston (2), at the end of its advance stroke, to cause the venting of the compressed fluid, **characterized in that** said valve (5) is located in the sidewall of the chamber and is constituted of a through borehole (6) and an internal sealing element (9), which borehole (6) is radially made in the sidewall of the chamber (3) and, in the outlet in the interior of the chamber, is provided with a seat (8) on which the sealing element (9) rests; and which element (9) is of a substantially non-deformable material and of a diameter greater than that of said seat (8).

2. A damper according to claim 1, **characterized in that** said seat (8) is constituted by a cylindrical sleeve or jacket (7) internally fixed in the borehole (6), from its outlet inside the chamber (3), the element (9) having a smaller diameter that that of the borehole (6), but greater than the internal diameter of the sleeve or jacket (7).

3. A damper according to claim 2, **characterized in that** the element (9) is fixed to the seat (8) defined by the sleeve or jacket (7) by means of an adhesive.

4. A damper according to the previous claims, **characterized in that** the sealing element (9) consists of a ball.

## Patentansprüche

1. Gasdämpfer, umfassend eine abgedichtete Kammer (3), die mit einem Druckfluid gefüllt ist und entlang der sich ein Kolben (2), der die Kompression des Fluids bewirkt, bewegen kann, wobei die Kammer (3) mit einem Sicherheitsventil (5), das durch den Kolben (2) am Ende seines Vorwärtshubes betätigt wird, versehen ist, um das Ablassen des Druckfluids zu bewirken, **dadurch gekennzeichnet, dass** sich das Ventil (5) in der Seitenwand der Kammer (3) befindet und aus einem Durchgangsbohrloch (6) und einem inneren Dichtungselement (9) gebildet ist, wobei das Bohrloch (6) in der Seitenwand der Kammer (3) radial ausgeführt und im Auslass im Innenraum der Kammer mit einem Sitz (8) versehen ist, auf welchem das Dichtungselement (9) aufliegt, und wobei das Element (9) aus einem im Wesentlichen nicht verformbaren Material ist und einen Durchmesser aufweist, der größer als der des Sitzes (8) ist.

2. Dämpfer nach Anspruch 1, **dadurch gekennzeichnet, dass** der Sitz (8) durch eine zylindrische Hülse oder Hülle (7) gebildet ist, welche im Bohrloch (6) von seinem Auslass innerhalb der Kammer (3) innen befestigt ist, wobei das Element (9) einen Durchmesser aufweist, der kleiner als der des Bohrlochs (6), aber größer als der Innendruchmesser der Hülse oder Hülle (7) ist.

3. Dämpfer nach Anspruch 2, **dadurch gekennzeichnet, dass** das Element (9) an dem Sitz (8), der durch die Hülse oder Hülle (7) definiert ist, durch einen Klebstoff befestigt ist.

4. Dämpfer nach einem der vorhergehenden Ansprüche, **dadurch gekennzeichnet, dass** das Dichtungselement (9) aus einer Kugel besteht.

## Revendications

1. Amortisseur à gaz comprenant une chambre étanche (3) remplie d'un fluide compressible le long de laquelle peut se déplacer un piston (2) provoquant la compression du fluide, la chambre comportant une soupape de sécurité (5) actionnée par le piston (2), en bout de sa course avant, pour faire échapper le fluide comprimé, **caractérisé en ce que** la soupape (5) est située dans la paroi latérale de la chambre et est constituée d'un trou percé traversant (6) et d'un élément intérieur de fermeture étanche (9), le trou percé (6) étant percé radialement dans la paroi latérale de la chambre (3) et, dans le port de sortie dans l'intérieur de la chambre, est muni d'une embase (8) sur laquelle repose l'élément de fermeture étanche (9), l'élément (9) étant en matériau essentiellement non déformable et de diamètre supérieur à celui de l'embase (8).

2. Amortisseur selon la revendication 1, **caractérisé en ce que** l'embase (8) est constituée par une chemise cylindrique ou gaine (7) fixée à l'intérieur du trou percé (6) à partir de sa sortie à l'intérieur de la chambre (3), l'élément (9) présentant un diamètre inférieur à celui du trou percé (6) mais supérieur au diamètre intérieur de la chemise ou gaine (7).

3. Amortisseur selon la revendication 2, **caractérisé en ce que** l'élément (9) est fixé à l'embase (8) définie par la chemise ou gaine (7) au moyen d'un adhésif.

4. Amortisseur selon l'une quelconque des revendications précédentes, **caractérisé en ce que** l'élément de fermeture étanche (9) est constitué d'une bille.
